# EUROPÄISCHE PATENTSCHRIFT

(11) **EP 1 297 090 B1**
(45) Veröffentlichungstag und Bekanntmachung des Hinweises auf die Patenterteilung: **22.09.2004**
(21) Anmeldenummer: 01964977.1
(22) Anmeldetag: 13.06.2001
(51) Int. Cl.: C09J 7/02, B65D 33/34, B65D 55/02, G09F 3/02

(54) **SICHERHEITSKLEBEBAND ZUM NACHWEIS DES UNBEFUGTEN ÖFFNENS EINER VERPACKUNG**
ADHESIVE SECURITY TAPE THAT ALLOWS TO DETECT UNAUTHORIZED OPENING OF A PACKAGING
BANDE ADHESIVE DE SECURITE PERMETTANT DE DETECTER L'OUVERTURE NON AUTORISEE D'UN EMBALLAGE

(30) Priorität: 21.06.2000 DE 10030596
(43) Veröffentlichungstag der Anmeldung: 02.04.2003
(73) Patentinhaber: tesa AG, 20253 Hamburg (DE)
(72) Erfinder: OTTEN, Ulrich, 22549 Hamburg (DE); WENNINGER, Dieter, 258371 Singapore (SI)
(86) Internationale Anmeldenummer: PCT/EP2001/006683
(87) Internationale Veröffentlichungsnummer: WO 2001/098424

(56) Entgegenhaltungen:
- EP-A- 0 651 365
- EP-A- 1 113 059
- WO-A-97/44769
- WO-A-99/55791
- US-A- 5 658 411

## Beschreibung

Die Erfindung bezieht sich auf ein mehrschichtiges Klebeband mit einem Träger auf Basis einer gereckten Thermoplastfolie, die einseitig mit Klebemasse beschichtet ist. Das Klebeband zeigt das unautorisierte Öffnen einer Verpackung an, indem Bereiche des Klebebands beim Abschälen von der beklebten Oberfläche aus dem Klebeband herausgelöst werden und als Botschaft auf der Oberfläche verbleiben, wobei die Botschaft vor dem Ablösen von der Oberfläche nicht erkennbar ist. Die Botschaft bleibt erkennbar, auch wenn das Klebeband nach dem Ablösen wieder exakt an der ursprünglichen Verklebungsstelle angelegt wird.

Der Schutz von Waren, die sich in der logistischen Kette vom Produzenten zum Verwender befinden, ist durch die Vielzahl der Glieder in dieser Kette schwieriger geworden. So ist der Schaden, der durch Diebstahl der Ware aus ihrer Versandverpackung während des Lagems und des Transports passiert, zu einem bedeutenden Kostenfaktor angestiegen. Der Empfänger einer Versandeinheit, in der ein Teil der Ware durch Diebstahl entnommen oder ausgetauscht wurde, hat zudem Schwierigkeiten zu beweisen, daß diese Manipulation nicht in seinem eigenen Einflußbereich vorgenommen wurde.

Eine bedeutend höhere Sicherheit gegen den Versuch eines Diebstahls und ein sicherer Nachweis, daß eine Versandeinheit vor Übernahme in den nächsten Abschnitt der logistischen Kette geöffnet wurde, ermöglicht ein Klebeband, das durch eine irreversible Botschaft anzeigt, daß es schon einmal von der Oberfläche der Versandeinheit abgelöst wurde.

Sicherheitssysteme zum Nachweis des unbefugten Öffnens sind bekannt und in einer Vielzahl im Stand der Technik beschrieben. Hierbei sind besonders Sicherheitsetiketten von großer Bedeutung. So werden zum Beispiel in US 4,184,701 Sicherheitsetiketten beschrieben, die aus mehreren Farb- beziehungsweise allgemein Schichten aufgebaut sind und dadurch eine geringe Haftung der Produktschichten untereinander aufweisen. In Kombination mit einer stark haftenden Klebemasse trennen sich derartige Schichten irreversibel voneinander, wodurch die Öffnung der Verpackung angezeigt wird.
Weiterhin wird beispielsweise in DE 34 31 239 A1 die Verwendung von Sicherheitsetiketten beschrieben, bestehend aus einem Trägermaterial mit geringer Weiterreißfestigkeit. In Kombination mit einer stark haftenden Klebemasse wird das Sicherheitsetikett beim Entfemen irreversibel zerstört und somit der Öffnungsversuch angezeigt.
Das Sicherheitsetikett weist eine untere, von einem Träger abzulösende und auf die Verpackung aufzubringende erste Klebstoffschicht auf der Unterseite eines ersten Etikettenmaterials auf, auf dessen Oberseite über eine zweite Klebstoffschicht ein zweites Etikettenmaterial aufgebracht ist. Die Stärke der Klebkraft der ersten Klebstoffschicht zwischen der Verpackung und dem ersten Etikettenmaterial ist verschieden von der Stärke der Klebkraft der zweiten Klebstoffschicht zwischen dem ersten Etikettenmaterial und dem zweiten Etikettenmaterial.

Sicherheitsktebebänder werden gewöhnlich so ausgeführt, daß im Bereich des Schriftzugs eine Verankerungsschwäche unterhalb des farbigen Aufbaus des Klebebandes eingeführt wird. So wird in US 5,633,058 ein schwach auf der Trägerfolie verankernder transparenter Buchstabendruck beschrieben, der mit einer vollflächigen farbigen, gut auf der Trägerfolie und dem ersten Druck verankernden Schicht überdeckt wird. Die farbige Schicht ist mit einer Selbstklebemasse abgedeckt. Wird ein derartiges Sicherheitsklebeband von einer Oberfläche abgeschält, löst sich der transparente Buchstabendruck zusammen mit der Farbschicht und der Klebemasse von der Folienoberfläche und verbleibt als Schriftzug auf der Oberfläche zurück.

EP 0 491 099 A1 beschreibt einen Buchstabendruck bestehend aus einem Silikonmaterial, das ebenfalls mit einer farbigen gut auf der Folie haftenden Schicht abgedeckt ist. Die farbige Schicht ist mit einer Selbstklebemasse abgedeckt. Wird ein derartiges Sicherheitsklebeband von einer Oberfläche abgeschält, lösen sich die Farbschicht und die Klebemasse von der Silikonoberfläche und verbleiben als Schriftzug auf der Oberfläche zurück.

Der Nachteil eines derartigen Aufbaus ist die aufwendige Verfahrenstechnik, um die Schichten zu erstellen, da partielle Silikonoberflächen eine weitere Beschichtung aufgrund der geringen Oberflächenspannung stark erschweren.

In US 4,121,003 wird beschrieben, daß das Übertragen eines Schriftzuges dadurch erreicht wird, daß dieser Schriftzug aus einem wenig kohäsiven Material besteht, das beim Ablösen des Sicherheitsklebebandes in sich spaltet und zum Teil auf der beklebten Oberfläche zurückbleibt.

EP 0 404 402 A2 basiert auf einer transparenten spaltbaren Schicht, die an der sich bildenden Grenzfläche opak wird und damit einem vorher nicht erkennbaren Schriftzug eine optische Kontrastfläche bietet, vor der der Schriftzug dann lesbar wird.

Ein Nachteil derartiger Aufbauten ist zudem, daß die Oberfläche von Versandeinheiten, die aus wenig spaltfestem Material wie zum Beispiel Papier bestehen, leicht durch das Klebeband aufgerissen werden. Dabei reißt die abgespaltene Oberfläche der Versandeinheit vollflächig unter dem Klebeband auf und haftet deckend auf der Oberfläche der Klebemasse. Der Schriftzug ist dann nicht auf die Kartonoberfläche übertragen worden und die vorgesehene Botschaft ist nicht erschienen.

Diesem nachteiligen Umstand tragen viele erhältliche Klebebänder dieses Typs dadurch Rechnung, daß sie eine schwach klebende Klebemasse besitzen, die sich ohne Aufreißen der Papieroberfläche abschälen lassen. Der Nachteil dieser Lösung ist jedoch eine nicht ausreichende Verklebungssicherheit auf den unterschiedlichen Arten von Papiermaterialien insbesondere Sorten mit hohem Altpapieranteil, so daß sich der U-förmige Verschluß einer Versandschachtel mit diesen Klebebändern unter dem Druck der Deckelklappen wieder löst und sich die Schachtel selbsttätig öffnet.

Ein wichtiger Anspruch an die Sicherheit gegen Manipulation ist die schnell und leicht sichtbare Individualität des Klebebandverschlusses. Normale Verpackungsklebebänder werden deshalb mit dem individuellen Firmenlogo auf der Trägerrückseite bedruckt, so daß ein Austausch oder ein Überkleben mit einem anderen Klebeband leicht erkannt werden kann. Die mögliche Druckauflage derartig gekennzeichneter Klebebänder ist im Minimum eine einzige Rolle, so daß eine hohe Individualität der Lieferung der Verpackungen, die mit diesem Klebeband verschlossen werden, erzielt werden kann.

Eine Kombination der beiden Sicherheitseffekte - "Botschaft übertragen" und "Individuelle Bedruckung" - ist bisher noch nicht zufriedenstellend gelungen. Die nachträgliche Bedruckung auf der Trägerrückseite der bisherigen Klebebänder ist aufgrund des notwendigen Silikonreleases auf dieser Oberfläche mit den üblichen Druckverfahren nicht möglich. Bei den bisherigen Ausführungen eines derartigen Klebebandes wird daher die Trägerfolie vor dem Ausrüsten mit den für den Effekt "Übertragen einer Botschaft" notwendigen Schichten bedruckt. Dieses hat zur Folge, daß nur große Auflagen an Klebebändem mit einem individuellen Druck wirtschaftlich herstellbar sind.

Erhältliche Ausführungen eines Sicherheitsklebebandes im beschriebenen Sinne werden ersatzweise mit einer fortlaufenden Nummer bedruckt, um eine Individualisierung zu erreichen. Diese Methode erfordert jedoch einen hohen Aufwand an informationsaustausch innerhalb der logistischen Kette. Zusätzlich ist ein aufwendiges Kontrollieren jeder Versandeinheit auf Übereinstimmung mit dem vom Produzenten angekündigten Nummernkreis erforderlich.

Die technische Ausführung eines solchen Sicherheitsklebebandes ist sehr kostenintensiv im Material und im Herstellverfahren. So werden bisher Trägerfolien eingesetzt, die aus teuren Materialien wie Polyester und Polystyrol bestehen. Folien auf Basis von Polystyrol sind aber spröde und widerstehen nicht den Stoß- und Fallbelastungen, die beim Transport und bei der Lagerung von mit Verpackungsklebebändern verschlossenen Verpackungen auftreten.

Thermoplastfolien auf Basis von Polyethylentherephthalat (PET) oder Polyvinylchlorid (PVC) werden zur Herstellung von Klebebändern von verschiedenen Herstellern eingesetzt. Hierbei zeichnen sich vor allem Folien auf Basis von PET durch eine hohe Reißdehnung und Wärmebeständigkeit von 130 °C bis 175 °C und Resistenz gegenüber verdünnten Laugen und Säuren aus.
Weiterhin besitzen Folien auf Basis von Polyestern eine sehr hohe Abriebfestigkeit und Durchschlagfestigkeit, sind aber aufgrund des relativ hohen Preises gegenüber Folien auf Basis von Polyolefinen weniger verbreitet im Bereich der Verpackungsklebebänder.

Folien auf Basis von PVC werden in Kombination mit lösemittelhaltigen Klebemassen auf Basis von Naturkautschuk von verschiedenen Herstellern als Verpackungsklebebänder angeboten. Hierbei werden aufgrund der besseren Wärmebeständigkeit Folien aus Hart-PVC verwendet, die bis max. 105 °C eine gute Wärmebeständigkeit aufweisen.
Die Gewinnung des PVC kann hierbei durch Emulsions-, Suspensions- oder Massepolymerisation erfolgen. Auch Copolymere auf Basis PVC/Vinylacetat sind bekannt.

Weiterhin zeichnen sich die Folien auf der Basis von Hart-PVC durch mittlere Durchschlagskraft und eine teilweise Resistenz gegenüber Benzin, Öl und Alkohole aus. Im allgemeinen ist die Verankerung von Primem auf PVC-Folien ohne Coronabehandlung besser als bei anderen Thermoplastfolien, wie beispielsweise Folien auf Basis von Polyolefinen. Dies beruht auf der hohen Oberflächenenergie auch ohne Vorbehandlung [ca. 39 dyn/cm] und auf der rauhen Oberflächenstruktur von PVC Folien. Für eine ausreichende Verankerung von Klebemassen auf Basis von Naturkautschuk ist eine mit Primer beschichtete PVC-Folie zu empfehlen.

Bei der Herstellung von Klebebändem mit Klebemassen auf Basis von Naturkautschuk werden sowohl wasserbasierende als auch lösemittelhaltige Primer als Haftvermittler zwischen Klebemasse und Trägerfolie eingesetzt. Diese eingesetzten Haftvermittler haben zum Teil eine auf die aus Lösung aufgetragene Klebemasse auf Basis von Naturkautschuk vemetzende Wirkung.

Aufgabe der vorliegenden Erfindung ist es, ein Sicherheitsklebeband zu schaffen, das beim Entfemen von der Oberfläche einer Verpackung einen Schriftzug auf dieser Verpackung hinterläßt. Gleichzeitig ist der identische Schriftzug auf dem abgezogenen Folienträger sichtbar.

Gelöst wird diese Aufgabe durch ein Klebeband, wie es im Hauptanspruch dargelegt ist. Gegenstand der Unteransprüche sind vorteilhafte Fortbildungen des Erfindungsgegenstandes. Des weiteren betrifft die Erfindung Verwendungsvorschläge des erfindungsgemäßen Klebebandes.

Demgemäß betrifft die Erfindung ein mehrschichtiges Klebeband mit einem Träger auf Basis einer gereckten Thermoplastfolie, dessen obere Seite gegebenenfalls mit einer Trennlackierung beschichtet ist und auf dessen untere Seite folgende Schichten aufgebracht sind:
- eine nicht vollflächig aufgetragene Primerschicht, wobei die Primerschicht sehr gut auf der Thermoplastfolie verankert,
- eine vollflächig über die aufgetragene Primerschicht und die freie Thermoplastfolienoberfläche aufgetragene erste Trennschicht, wobei die Trennschicht besser auf der Primerschicht verankert ist als auf der Thermoplastfolie,
- mindestens eine vollflächig auf die erste Trennschicht aufgetragene zweite Trennschicht, wobei die zweite Trennschicht beziehungsweise die gegebenenfalls weiteren Trennschichten besser auf der vorhergehenden Trennschicht verankert sind als die erste Trennschicht auf der Thermoplastfolie,
- eine vollflächig auf die zweite beziehungsweise gegebenenfalls letzte Trennschicht aufgetragene Haftklebemasse, die auf der zweiten beziehungsweise gegebenenfalls letzten Trennschicht besser verankert ist als die erste Trennschicht auf der Thermoplastfolie und wobei die Klebemasse besser auf dem Haftgrund haftet als die erste Trennschicht auf der Thermoplastfolie.

Beim Entfernen des erfindungsgemäßen Klebebands von der Oberfläche einer Verpackung hinterlässt dieses einen beispielsweise inversen Schriftzug auf der Verpackung, indem sich die insbesondere farbige erste Trennschicht zusammen mit der zweiten beziehungsweise den gegebenenfalls weiteren Trennschichten von den nicht geprimerten Bereichen der Thermoplastfolie abtrennt, während Bereiche, die mittels Primer auf der Trägeroberfläche gut verankert sind, mit dem Träger von der Oberfläche der Verpackung abgelöst werden.
Der Bereich der ersten Trennschicht, der gegen die Folienoberfläche mit der Primerschicht stark verankert wurde, verbleibt auf der Trägeroberfläche.

Durch eine geeignete Anzahl und Dicke der einzelnen Trennschichten wird die sichere Trennung innerhalb des Klebebandes erreicht und das Aufspalten der Verpackungsoberfläche insbesondere bei Kartonagen durch die Klebemasse vermieden. Der Schriftzug ist insbesondere auf alle handelsüblichen Papierqualitäten für Kartons sicher übertragbar. Die Botschaft ist vor dem Ablösen des Klebebands von der Oberfläche nicht erkennbar. Nach dem Ablösen bleibt die Botschaft erkennbar, auch wenn das Klebeband wieder exakt an der ursprünglichen Verklebungsstelle angelegt wird, so daß der Nachweis einer Manipulation quantitativer oder qualitativer Art am verpackten Produkt erkennbar bleibt.

Das Sicherheitsklebeband gewährleistet, daß die Botschaft sicher auf
a) festen schwer spaltbaren Oberflächen,
b) auf wenig spaltfesten Oberflächen und
c) auf Oberflächen mit antiadhäsiven Eigenschaften übertragen wird, wie sie bei handelsüblichen Papierqualitäten aus Altpapier üblich sind.

Femer ist das erfindungsgemäße Sicherheitsklebeband so ausgeführt, daß eine ökonomische individuelle Bedruckung für minimal eine Rolle möglich ist.

In einer ersten vorteilhaften Ausführungsform des Klebebands besteht die Thermoplastfolie aus gerecktem HDPE, PVC, PET, aus monoaxial gerecktem Polypropylen oder aus biaxial gerecktem Polypropylen und ist insbesondere transparent.

Folien auf Polyesterbasis, zum Beispiel eben Polyethylenterephthalat, können ebenso zur Herstellung der erfindungsgemäßen Klebebänder eingesetzt werden.
Die Dicken der Folien auf Basis von PET liegen zwischen 20 und 100 µm, insbesondere zwischen 30 und 50 µm.

Folien auf Basis von gereckten Polyolefinen gehören zum Stand der Technik. Monoaxial und biaxial gereckte Folien auf Basis von Polyolefinen werden in großen Mengen für Verpackungsklebebänder, Strapping Tapes und andere Klebebänder eingesetzt. Auch Folien auf Basis von gerecktem Polyethylen oder gereckten Copolymeren, enthaltend Ethylen- und/oder Polypropyleneinheiten, sind bekannt. All diese aufgezählten Folien lassen sich als Trägerfolie erfindungsgemäß einsetzen.

Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet. Bevorzugt zur Herstellung der erfindungsgemäßen Klebebänder zum Bündeln und Palettieren von Kartonagen und anderen Gütern sind monoaxial gereckte Folien auf Basis von Polypropylen.
Die Dicken der monoaxial gereckten Folien auf Basis von Polypropylen liegen bevorzugt zwischen 25 und 200 µm, insbesondere zwischen 40 und 130 µm.
Folien aus monoaxial gerecktem Polypropylen sind zur Herstellung der erfindungsgemäßen Klebebänder besonders geeignet. Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Bevorzugt zur Herstellung der erfindungsgemäßen Klebebänder zum sicheren Kartonverschluß sind biaxial gereckte Folien auf Basis von Polypropylen mit einem Reckverhältnis in Längsrichtung zwischen 1 : 4 und 1 : 9, bevorzugt zwischen 1 : 4,8 und 1 : 6 sowie einem Reckverhältnis in Querrichtung zwischen 1 : 4 und 1 : 9, bevorzugt zwischen 1 : 4,8 und 1 : 8,5.
Die erzielten Elastizitätsmodule in Längsrichtung, gemessen bei 10 % Dehnung nach ASTM D882, liegen üblicherweise zwischen 1000 und 4000 N/mm², vorzugsweise zwischen 1500 und 3000 N/mm².
Die Dicken der biaxial gereckten Folien auf Basis von Polypropylen liegen besonders zwischen 15 und 100 µm, vorzugsweise zwischen 20 und 50 µm.
Biaxial gereckte Folien auf Basis von Polypropylen können mittels Blasfolienextrusion oder mittels üblicher Flachfolienanlagen hergestellt werden. Biaxial gereckte Folien werden sowohl ein- als auch mehrschichtig hergestellt. Im Falle der mehrschichtigen Folien können auch hier die Dicke und Zusammensetzung der verschiedenen Schichten gleich sein, aber auch verschiedene Dicken und Zusammensetzungen sind bekannt.

Besonders bevorzugt für die erfindungsgemäßen Klebebänder sind einschichtige, biaxial oder monoaxial gereckte Folien und mehrschichtige, biaxiale oder monoaxiale Folien auf Basis von Polypropylen, die einen ausreichend festen Verbund zwischen den Schichten aufweisen, da ein Delaminieren der Schichten während der Anwendung nachteilig ist.

Folien auf Basis von Hart-PVC sind ebenfalls bekannt und werden von verschiedenen Klebebandherstellern zur Herstellung von Verpackungsklebebändern verwendet. Weich-PVC-Folien sind ebenfalls zur Herstellung von Verpackungsklebebändern geeignet, wobei deren unzureichende Wärmebeständigkeit von max. 60 °C berücksichtigt werden muß.
Für die erfindungsgemäßen Klebebänder für einen sicheren Kartonverschluß werden vorzugsweise Folien verwendet auf Basis von Hart-PVC. Die Dicken der Folien liegen bevorzugt zwischen 30 und 100 µm, insbesondere zwischen 35 und 50 µm. Die erfindungsgemäßen Klebebänder werden als Verpackungsbänder zum Kartonverschluß verwendet.

Trennlackierungen, wie sie auf der oberen, also auf die der Klebemasse gegenüberliegenden Folienoberfläche gegebenenfalls beschichtet sind, werden in der Klebebandindustrie weit verbreitet eingesetzt. Eine Übersicht über Trennlacksysteme auf Basis von Silikon und deren Einsatz im Bereich Pressure Sensitive Adhesives findet sich in "Silicone Release coating" (D. Jones, Y. A. Peters in Handbook of Pressure Sensitive Adhesive Technology, Third Edition, edited by Donatas Satas, Van Reinhold New York. Pp. 652-683).

Durch den Einsatz von Rückseitentrennlackierungen wird ein leichtes, gleichmäßiges Abrollen der Klebebänder erzielt. Hierbei werden vor allem Trennlackierungen auf Basis von lösemittelhaltigen Carbamatsystemen und auf Basis von auf Silikon basierenden Systemen eingesetzt.
Trennlackierungen auf Basis von Silikonsystemen eignen sich als Trennlackierungen der erfindungsgemäßen Klebebänder. Bevorzugt als Trennlackierung sind UV-härtende Silikonsysteme auf 100% Basis, aber ebenso lösemittelhaltige Silikonsysteme können als Trennlackierung für die erfindungsgemäßen Klebebänder eingesetzt werden.
Die Auftragsmenge der Trennlackierung auf das Trägermaterial beträgt bevorzugt 0,1 bis 3 g/qm. In einer weiteren besonders bevorzugten Ausführung wird der Schichtauftrag der Trennlackierung von 0,2 bis 1,5 g/qm eingestellt.

Um eine sehr gute Verankerung der ersten Trennschicht des erfindungsgemäßen Klebebands auf bestimmten Bereichen auf der Folie zu erreichen, wird als erste Schicht ein Haftvermittler oder Primer eingesetzt. Hierbei wird die der Trennlackierung gegenüberliegende Folienoberfläche verwendet.

Haftvermittler auf Lösemittel- und auf wäßriger Basis werden als Haftvermittler zwischen Folie und Klebemasse oder weiteren Schichten zur Herstellung von Klebebändern verwendet. Schichten mit hoher Affinität zu Trägem beziehungsweise Haftung auf Trägem auf Basis von Thermoplastfolien werden zur Herstellung von Klebebändern eingesetzt. Die hohe Affinität zu Oberflächen von Trägem auf Basis von Thermoplastfolien bedingen die Eigenschaft derartiger Komponenten für den Einsatz als geeignete Haftvermittler. Verschiedene Primersysteme sind bekannt. Für den Einsatz als Haftvermittler für die erste Trennschicht der erfindungsgemäßen Klebebänder sind zum Beispiel wäßrige Haftvermittler auf Basis von Polyurethanen, niedrig chlorierte Polypropylene, Styrol-Butadien Copolymere und Acrylate einsetzbar. Ebenso lösemittelhaltige Haftvermittler sind für die Verankerung nachfolgender Schichten bei den erfindungsgemäßen Klebebändern geeignet. Diese Haftvermittler werden in der Klebebandindustrie als Primer verwendet.

Die Auftragsmenge der Primerschicht auf das Trägermaterial beträgt bevorzugt 0,5 bis 12 g/qm. In einer weiteren bevorzugten Ausführung wird ein Schichtauftrag von 1,5 bis 6 g/qm eingestellt.

In einer bevorzugten Ausführungsform des Klebebands wird die Haftung der Primerschicht auf der Thermoplastfolie auf Basis von Polyolefinen durch Coronabehandlung oder ganz besonders durch Flammenvorbehandlung verbessert, denn gerade die Oberflächen der Folien auf Basis von gereckten Polyolefinen können durch diese allgemein bekannten Verfahren, wie die Corona- oder Flammenbehandlung, behandelt werden. Bevorzugt sind Oberflächenbehandlungen durch Flammenvorbehandlung. Eine Übersicht über die Verfahren zur Oberflächenbehandlung enthält beispielsweise der Artikel "Surface pretreatment of plastics for adhesive bonding" (A. Kruse; G. Krüger, A. Baalmann and O. D. Hennemann; J. Adhesion Sci. Technol., Vol 9, No12, pp 1611-1621 (1995)).

Die Primerschicht wird nicht vollflächig auf die der Trennlackierung gegenüberliegenden Oberfläche des Trägers aufgetragen. Um einen visuellen Sicherheitseffekt bei der Anwendung der erfindungsgemäßen Klebebänder zu erreichen, wird die Primerschicht in einer spezifischen nicht vollflächigen Weise auf die Folienoberfläche aufgebracht. Hierbei wird der Auftrag der Primerschicht derart gestaltet, daß spezielle Bereiche der Folienoberfläche beschichtet werden oder frei bleiben, und diese Bereiche zum Beispiel die Worte "OPENED" oder "VOID" bilden. Diese Art der Aufbringung der Primerschicht wird durch geeignete Druckverfahren ermöglicht.
Die von der nicht vollflächig aufgetragenen Primerschicht beschichteten beziehungsweise nicht beschichteten Bereiche auf der Folienoberfläche stellen bevorzugt charakteristische Zeichen beziehungsweise Symbole dar.

Eine erste Trennschicht wird vollflächig auf die Primerschicht beziehungsweise auf die freien Oberflächenbereiche der verwendeten Folie zur Herstellung der erfindungsgemäßen Klebebänder aufgetragen. Als Trennschicht für die erfindungsgemäßen Klebebänder eignen sich zum Beispiel Harzdispersionen, Acrylatdispersionen oder allgemein Polymerdispersionen beziehungsweise lösemittelhaltige Polymerlösungen, die eine nach der Trocknung ausreichende geringe Haftung zum Träger und eine Sprödigkeit aufweisen.

Besonders bevorzugt als Schicht für die erfindungsgemäßen Klebebänder sind geeignete Druckfarben für Träger auf Basis von Thermoplastfolien. Hierbei werden zum Beispiel wasserbasierende, lösemittelbasierende oder durch UV-Strahlung härtende Flexodruckfarben als Schicht verwendet. Derartige Farbschichten sind farbstark und geeignet, mittels verschiedenster Technologie auf die erste Schicht beziehungsweise die Folie aufgebracht zu werden. Durch geeignete Wahl der Druckfarben kann das Schichtsystem der erfindungsgemäßen Klebebänder derart eingestellt werden, daß die Schicht sehr gut auf der Primerschicht verankert, andererseits, mit denen nicht mit der Primerschicht beschichteten Bereichen der Folie, eine schlechte Haftung beziehungsweise einen schlechten Verbund aufweist.

Die Auftragsmenge der ersten Trennschicht auf das Trägermaterial beziehungsweise auf die Primerschicht beträgt bevorzugt 2 bis 18 g/qm. In einer weiteren bevorzugten Ausführung wird ein Schichtauftrag der ersten Schicht von 5 bis 11 g/qm eingestellt.

Die zweite und folgende Trennschichten werden vollflächig bei der Herstellung der erfindungsgemäßen Klebebänder auf die erste Trennschicht aufgetragen.
Die Auftragsmenge der zweiten beziehungsweise gegebenenfalls weiteren Trennschicht auf die erste Trennschicht beträgt wieder bevorzugt 2 bis 18 g/qm, weiter bevorzugt 5 bis 11 g/qm.

Als zweite und für die gegebenenfalls folgenden Trennschichten für die erfindungsgemäßen Klebebänder eignen sich wässrige oder lösemittelhaltige Druckfarben, die eine nach der Trocknung ausreichend hohe Haftung auf der ersten Trennschicht und eine ausreichende Sprödigkeit aufweisen.

Durch geeignete Abstimmung der chemischen Zusammensetzung beziehungsweise Abstimmung und Optimierung der verschiedenen Polaritäten, Sprödigkeiten und Zusammensetzungen der ersten und zweiten beziehungsweise gegebenenfalls der folgenden Trennschichten bedingt das bei den erfindungsgemäßen Klebebändern beschriebene Eigenschaftsprofil.

Bevorzugt bei der Herstellung der erfindungsgemäßen Klebebänder sind zum Beispiel wasserbasierende, lösemittelbasierende und/oder durch UV-Strahlung härtende Flexodruckfarben für den Einsatz als zweite Trennschicht.
Derartige Farbschichten sind farbstark und geeignet mittels verschiedenster Technologie auf die erste Trennschicht aufgebracht zu werden.

Als Klebemassen können im wesentlichen alle bekannten Klebemassen mit hoher Klebkraft auf dem zu verpackenden Haftgrund eingesetzt werden.

Die Klebemasse des erfindungsgemäßen Klebebandes kann aus einer Klebemasse auf Basis von lösemittelhaltigen Naturkautschuk- und Acrylatklebemassen bestehen. Bevorzugt sind Klebemassen auf Basis von Acrylatdispersionen. Diese Klebemassentechnologien werden in der Klebebandindustrie eingesetzt.

Die Auftragsmenge der Klebemasse auf das Trägermaterial beträgt bevorzugt 15 bis 60 g/qm. In einer weiteren bevorzugten Ausführung wird der Schichtauftrag von 20 bis 30 g/qm eingestellt.

Die Herstellung der erfindungsgemäßen Klebebänder erfolgt in einem mehrstufigen Prozeß. In einem ersten Schritt erfolgt die Beschichtung einer der Oberflächen des Trägers auf Basis einer Thermoplastfolie mit der auf Silikon basierenden Trennlackierung. Diese einseitige Ausrüstung des Trägers wird mit entsprechenden Beschichtungsanlagen realisiert.

Die der Trennlackierung gegenüberliegende Folienoberfläche wird gegebenenfalls corona- oder flammenvorbehandelt.

Die Primerschicht mit hoher Affinität zur Oberfläche der eingesetzten Thermoplastfolie wird mit Hilfe des Flexodrucks auf die der mit Trennlackierung gegenüberliegenden Folienoberfläche aufgebracht.

Bedruckung mittels Flexodruck wird unter anderem in der Klebebandindustrie zur Individualisierung von Klebebändern eingesetzt.
Hierbei werden Druckformen verwendet, deren erhabene Partien die erste Schicht übertragen. Die Druckformen sind flexible Platten aus Gummi oder Fotopolymeren. Flexodruckkomponenten sind dünnflüssig, sowohl lösemittel- als auch wasserbasierend. Sie sind schnell trocknend, insbesondere im Bereich der strahlungshärtenden Systeme. Bei der Herstellung der erfindungsgemäßen Klebebänder werden bevorzugt wäßrige Flexodruckkomponenten eingesetzt. Die Auswahl der Rasterwalze richtet sich nach dem verwendeten Bedruckstoff, der dazugehörenden Flexodruckkomponente.

Die Aufbringung der ersten Trennschicht auf die Primerschicht beziehungsweise an die offenen Stellen auf die Folienoberfläche wird bei der Herstellung der erfindungsgemäßen Klebebänder durch Anwendung von üblichen Methoden erreicht. Die Beschichtung wäßriger Systeme mittels Rakel beziehungsweise lösemittelhaltiger Systeme mittels Streichbalken Rasterwalzen oder Druckverfahren ist in diesem Zusammenhang zu nennen.

Die Aufbringung der zweiten Trennschicht auf die erste Trennschicht wird bei der Herstellung der erfindungsgemäßen Klebebänder durch Anwendung von üblichen Methoden erreicht. Die Beschichtung wässriger Systeme mittels Rakel beziehungsweise lösemittelhaltiger Systeme mittels Streichbalken Rasterwalzen oder Druckverfahren ist in diesem Zusammenhang zu nennen.

Gegebenenfalls weitere Schichten werden in gleicher Art und Weise aufgebracht wie die zweite Schicht.

Für die nachfolgende Beschichtung der Klebemasse auf die letzte Trennschicht sind sowohl die Streichbalken als auch die Rakeltechnologie geeignet.
Weiterhin ist das Aufbringen von Klebemasse auf Basis von Styrol-Isopren-Styrol als Schmelzhaftkleber auf die zweite Trennschicht mittels bekannter Technologie bei der Herstellung der erfindungsgemäßen Klebebänder möglich.

Anhand der nachfolgend beschriebenen Figuren 3-5 wird eine besonders vorteilhafte Ausführung des erfindungsgemäßen Klebebands mit zwei Trennschichten sowie die Anwendung und die Funktion näher erläutert, ohne damit die Erfindung unnötig einschränken zu wollen. Es zeigen
- Figur 3: eine Darstellung, die das erfindungsgemäße Klebeband zeigt, wenn es teilweise von der Kartonoberfläche abgelöst ist,
- Figur 4: eine Schnittzeichnung des erfindungsgemäßen Klebebandes in seiner ursprünglichen und verklebten Form, in der die Schichtdicken so dargestellt sind, daß sie optimal die Konstruktion und den Aufbau des Klebebandes erkennen lassen, und
- Figur 5: eine Schnittzeichnung ähnlich Figur 4, die jedoch die Verhältnisse der einzelnen Schichten zeigen, wenn das Klebeband erstmalig vom Karton abgezogen wird.

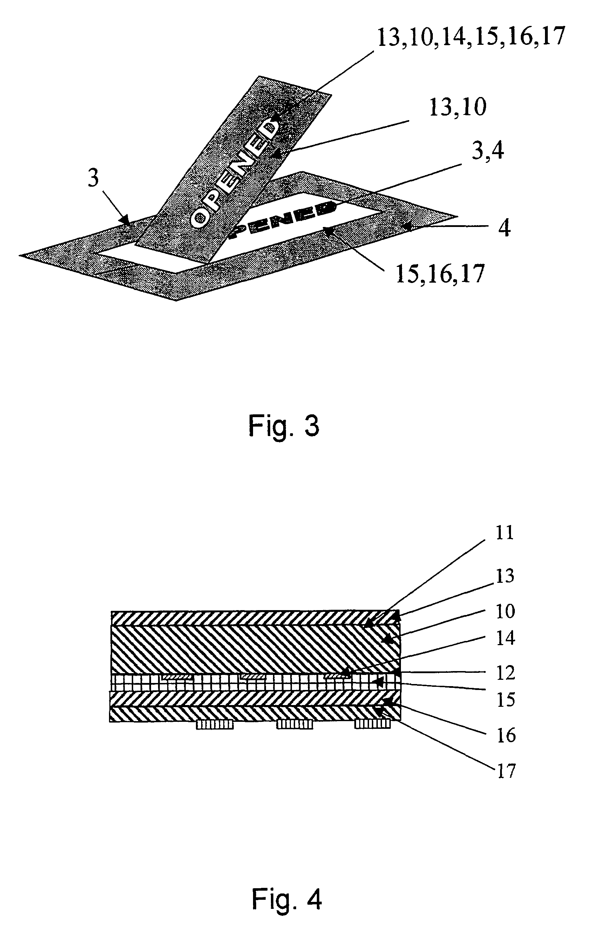

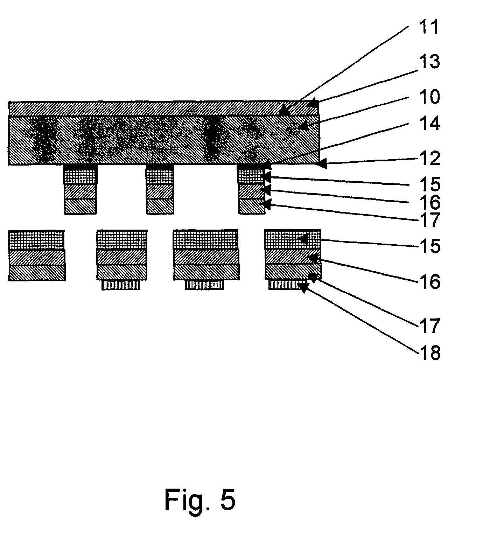

Das Klebeband der vorliegenden Erfindung ist so konstruiert und hergestellt, daß das Öffnen und Schließen nach der beschriebenen Weise nicht unbemerkt möglich ist.

Gemäß Figur 4 besteht das Klebeband aus einer vorzugsweise transparenten thermoplastischen Folie 10 mit einer ausreichenden inneren Festigkeit, die den beschriebenen Gebrauch sicherstellt.

Auf der unteren Oberfläche 12 dieser Folie 10 wird in einem ersten Arbeitsgang eine nicht vollflächige transparente Primerschicht 14 aufgebracht. Die Schicht 14 ist so auf der Folienoberfläche 12 angeordnet, das sie einen Schriftzug ergibt, der im Falle des Ablösen des Klebebandes 1 auf der Kartonoberfläche erkennbar ist.

Im zweiten Schritt wird eine erste Trennschicht 15 auf die Primerschicht 14 und die verbleibende Folienoberfläche 12 aufgebracht. Die Trennschicht 15 besteht aus einem farbigen Material.

Im dritten Schritt wird eine weitere Trennschicht 16 vollflächig auf die Trennschicht 15 aufgebracht. Die Trennschicht 16 besteht aus einem farbigen oder farblosen Material.

Die Farbe und die Farbdichte der Schichten 15 und 16 sind so ausgewählt, dass sie einerseits einen ausreichenden farblichen Kontrast zu den üblichen Kartonmaterialfarben bieten, so dass der gebildete Schriftzug lesbar ist, dass sie aber auch ein auf der Klebemasseschicht 17 liegenden Druck eines Firmenlogos oder Markenkennzeichens gut erkennbar durchscheinen lassen.

Als nächstes ist die Klebemasseschicht 17, die eine ausreichende Verklebungssicherheit auf der Kartonoberfläche sicherstellt, auf der Trennschicht 16 aufgebracht.

Die Primerschicht 14 haftet relativ sehr stark auf der Folienoberfläche 12. Die Trennschicht 15 haftet nur relativ schwach auf der Folienoberfläche 12, aber relativ stark auf der Primerschicht 14.
Die Haftung der Trennschicht 15 auf der Folienoberfläche 12 ist geringer als die Haftung der Trennschicht 16 auf der Klebemasseschicht 17. Die Haftung der Trennschicht 15 auf der Trennschicht 16 ist höher als die Haftung der Primerschicht 14 auf der Folienoberfläche 12.

Auf der Oberseite 11 des Folienträgers 10 wird eine vorzugsweise transparente Trennschicht 13 aufgebracht, die relativ stark auf der Oberfläche 11 haftet. Die Haftung der Trennschicht 13 zur Klebemasseschicht 17 ist gering, so daß das zur Rolle gewickelte Klebeband abgewickelt werden kann, ohne daß eine Trennung der Trennschicht 15 von der Folienoberfläche 12 auftritt.

In diesem Prozeß oder in einem weiteren Prozeß kann auf der äußeren Oberfläche der Klebemasse 17 ein farbiger Druck 18 eines Firmenlogos oder Markenzeichens aufgebracht werden.

Wenn das Klebeband im Aufbau gemäß Figur 4 auf einer Oberfläche verklebt ist, ist durch die bevorzugte Transparenz der Trennschicht 13 und des Folienträgers 10 sowie der Primerschicht 14 die gleichförmige Farbe der Farbschichten 15 beziehungsweise 16 sichtbar und gegebenenfalls die durch die Klebemasseschicht 17 durchscheinende Farbschicht 18.

Wenn das Klebeband - wie in Figur 3 gezeigt - von der Kartonoberfläche abgelöst wird, trennt sich das Klebeband entsprechend Figur 5 auf. Dabei trennt sich die Trennschicht 15 zusammen mit der Trennschicht 16 und der Klebemasse 17 in dem Bereich, in dem sich die Trennschicht 15 im direkten Kontakt zur Folienoberfläche 12 befindet, von der Folie 10 ab und verbleibt auf der Kartonoberfläche 3, 4. In dem Bereich, in dem sich die Primerschicht 14 befindet, trennt sich die Klebemasseschicht 17 von der Kartonoberfläche 3, 4 und verbleibt zusammen mit der Trennschicht 15 und der Trennschicht 16 auf der Trägerfolie 10. Das Wort "OPENED" ist als Schriftzug auf Kartonoberfläche 3, 4 sichtbar und als farbiger Schriftzug auf dem Träger 10.

Beim Wiederauflegen des abgelösten Teils des Klebebandes bleibt der Schriftzug "OPENED" sichtbar, da er durch die Luftschicht an der Grenzfläche zwischen Trennschicht 15 und Folienoberfläche 12 eine veränderte Lichtbrechung gegenüber der Grenzfläche der Primerschicht 14 und Folienoberfläche 12 einen optischen Kontrast bildet.

Weiterhin läßt sich der Schriftzug auf der Trägerfolie 10 durch den beim Applizieren und Ablösen verformten Träger 10 nicht mehr deckungsgleich in den freien Schriftzug auf der Kartonoberfläche einlegen.

Das erfindungsgemäße Klebeband ist für die Anwendung als Sicherheitsverschluß zur deutlichen Erkennung eines unbefugten Öffnungsversuches beziehungsweise einer Öffnung für eine große Anzahl wertvoller beziehungsweise sensibler Güter geeignet. Ein wichtiges Anwendungsfeld ist hierbei die Sicherung verschiedenster Konsumgüter gegen Diebstahl, Verfälschung des Inhalts und der Schutz vor Raubkopien. Das unbemerkte Öffnen, Diebstahl und Verfälschung sensibler Güter wird durch die Anwendung der erfindungsgemäßen Klebebänder vermieden.
Die erfindungsgemäßen Klebebänder sind auf Grund der leichten vollflächigen inneren Trennung beim Entfernen des Klebebandes besonders für die Öffnungssicherung beziehungsweise Verpackung von leicht spaltbaren Papierverpackungen beziehungsweise die Verpackung von Kraftlinerkartons geeignet.

Die erfindungsgemäßen Klebebänder sind für eine große Anzahl von Klebebandanwendungen geeignet. Ein wichtiges Anwendungsfeld sind Verpackungsanwendungen. Die Klebebänder sind geeignet als Kartonverschlußbänder, allgemeine Verpackungsklebebänder, Strapping Tapes, Klebebänder zum Verschließen von Kunststoffverpackungen und Kunststoffbeuteln. Die Klebebänder sind zur Palettensicherung geeignet. Weitere Anwendungen sind das Bündeln loser Güter und Transportgüter, wie beispielsweise Rohren, Holzleisten u.a.. Die erfindungsgemäßen Klebebänder können zur Transportsicherung von beispielsweise Kühlschränken und anderen elektrischen und elektronischen Geräten verwendet werden. Weitere Anwendungen sind Etikettenschutz, Oberflächenschutz, beispielsweise im Baubereich und Aufreißstreifen für Verpackungen. Ebenso sind Anwendungen im Bürobereich möglich.

Weiterhin sind Anwendungen bei der Verpackung von medizinischen und pharmazeutischen Produkten, die Sicherung von Verpackungen mit Kosmetika und Körperpflegeartikeln sowie von Nahrungs- und Genußmitteln als Sicherheitsverschluß möglich. Dann ist eine Anwendung zur Sicherung von elektronischen und elektrischen Geräten möglich.
Die erfindungsgemäßen Klebebänder sind besonders gut geeignet für die Anwendung als Sicherheits- und Kartonverschluss in Zusammenhang mit Kartontypen, die besonders leicht zum Ausriss der Papierfasem neigen (Kraftliner). Durch den Einsatz der erfindungsgemäßen Klebebänder wird der Faserausriß vollständig vermieden und damit der Sicherheitseffekt des Verschlusses bei allen Kartontypen gewährleistet.

Im folgenden soll die Erfindung anhand eines Beispieles erläutert werden, ohne die Erfindung unnötig einschränken zu wollen.

### Beispiel

### a: Folie a

Es wird eine biaxial gereckte, coextrudierte Folie auf Basis Polypropylen der Fa. Siliconature verwendet.

| | |
|---|---|
| Foliendicke | 28 µm |
| Kennzeichnung | Radil T |
| Firma/Hersteller | Fa. Radici |
| Reißdehnung längs | 130 % |
| Reißdehnung quer | 50 % |
| Elastizitätsmodul längs | 2500 N/mm² |
| Elastizitätsmodul quer | 4000 N/mm² |

Die Oberfläche der Folie, die mit einer Primerschicht und der ersten Trennschicht beschichtet wird, wird vor der Beschichtung mit Klebemasse Corona behandelt. Die Oberflächenenergie beträgt > 42mN/m.

### b: Verwendete Klebemassen, Primerschicht und Trennschichten

### b1: Trennlackierung

Es wird ein Trennlack auf Basis eines Standard 100% Silikonsystems (UV- härtend) zur Herstellung der erfindungsgemäßen Klebebänder verwendet.

### b2: Primerschicht

Es wird eine Primerschicht auf Basis einer wäßrigen Polyurethandispersion zur Herstellung der erfindungsgemäßen Klebebänder verwendet.
Bezeichnung: NeoRez R560 der Fa. Zeneca resins, The Netherlands

### b3: Erste Trennschicht

Es wird eine Trennschicht auf Basis einer lösemittelhaltigen Druckfarbe zur Herstellung der erfindungsgemäßen Klebebänder verwendet.
Bezeichnung: 15VAA Druckfarbe der Michael Huber München GmbH, Germany

### b4 Zweite Trennschicht

Es wird eine Trennschicht auf Basis einer wässrigen Druckfarbe zur Herstellung des erfindungsgemäßen Klebebandes verwendet.
Bezeichnung: 6610 PW Druckfarbe der Michael Huber München GmbH, Germany

### b5: Klebemasse:

Es wird eine Klebemasse auf Basis einer wäßrigen Acrylatdispersion zur Herstellung der erfindungsgemäßen Klebebänder verwendet.
Bezeichnung: Primal PS83D der Fa. Rhom&Haas, Germany

### c: Herstellung der Klebebänder

### c1: Aufbringen der Trennlackierung

Die Beschichtung der Folie a mit einer Standard silikonbasierenden Trennlackierung erfolgt mittels der hierfür üblichen Standard Technologie

### c2: Beschichtung der Primerschicht:

Die Beschichtung der Folie c1 mit der Primerschicht erfolgt mit Hilfe der Flexodrucktechnik. Hierbei wird ein Flexodruckklischee verwendet, dessen erhabene Partien das Wort "OPENED" abbilden.

Dabei wird das Laborflexodruckklischee und die Bahngeschwindigkeit so eingestellt, daß nach der Trocknung ein Masseauftrag der Primerschicht von ca. 1 bis 3 g/qm gemessen wird. Die Beschichtung erfolgt auf einer Laborstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 100 °C) betrieben wird. Die beschichtete Folie wurde ohne Lagerzeit sofort weiterverwendet.

### c3: Beschichtung der ersten Trennschicht

Die Beschichtung der Folie c2 mit der Trennschicht erfolgt durch einen Drahtrakel. Das Drahtrakel und die Beschichtungsgeschwindigkeit werden so eingestellt, daß nach der Trocknung der beschichteten Folie ein Masseauftrag der Trennschicht von ca. 8 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation befindet sich ein Trockenkanal, der mit heißer Luft (ca. 100 °C) betrieben wird. Die beschichtete Folie wird ohne Lagerung sofort weiterverwendet.

### c4: Beschichtung der zweiten Trennschicht

Die Beschichtung der Folie c3 mit der Trennschicht erfolgt durch einen Drahtrakel. Das Drahtrakel und die Beschichtungsgeschwindigkeit werden so eingestellt, daß nach der Trocknung der beschichteten Folie ein Masseauftrag der Trennschicht von ca. 5 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation befindet sich ein Trockenkanal, der mit heißer Luft (ca. 100 °C) betrieben wird. Die beschichtete Folie wird ohne Lagerung sofort weiterverwendet.

### c5: Beschichtung der Klebemasse

Die Beschichtung der Folie c4 mit der Klebemasse erfolgt durch einen Drahtrakel. Das Drahtrakel und die Beschichtungsgeschwindigkeit werden so eingestellt, daß nach der Trocknung der beschichteten Folie ein Masseauftrag von ca. 25 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 100 °C) betrieben wird. Die beschichtete Folie wurde in einer Breite von 19 mm konfektioniert. Die Bestimmung des Sicherheitseffekts erfolgte nach zweitägiger Lagerung bei 23 °C.

### f: Ergebnisse

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Aceton entfemt und die nun klebemassefreie Folie erneut gewogen. Aus der Differenz wird der Masseauftrag in g/m² berechnet.

Zur Bestimmung des Sicherheitseffekts wurden die gemäß Beispiel hergestellten Klebebänder untersucht. Zur Charakterisierung des Sicherheitseffekts auf Kartonoberflächen wurden Klebstreifen der Klebebänder auf Kartonagen verklebt und mittels einer 2 kg schweren Stahlrolle angedrückt (zweimaliges Überrollen). Danach wurde sofort und nach einer Wartezeit von 24 Stunden bei 23 °C manuell der Klebestreifen abgezogen.

| Verklebung auf | Kraftliner Karton | Recyceltem Karton (Testliner Karton) |
|---|---|---|
| Kartonoberfläche | gut | kritisch |
| Buchstabenübertrag | Sehr gut | Sehr gut |
| Deutlicher Sicherheitseffekt | ja | ja |
| Unbemerktes Öffnen des Kartons | Nicht möglich | Nicht möglich |
| Verpackungssicherheit | Sehr gut | Sehr gut |

## Patentansprüche

1. Mehrschichtiges Klebeband mit einem Träger auf Basis einer gereckten Thermoplastfolie, dessen obere Seite gegebenenfalls mit einer Trennlackierung beschichtet ist und auf dessen untere Seite folgende Schichten aufgebracht sind:
a) eine nicht vollflächig aufgetragene Primerschicht, wobei die Primerschicht sehr gut auf der Thermoplastfolie verankert,
b) eine vollflächig über die aufgetragene Primerschicht und die freie Thermoplastfolienoberfläche aufgetragene erste Trennschicht, wobei die Trennschicht besser auf der Primerschicht verankert ist als auf der Thermoplastfolie,
c) mindestens eine vollflächig auf die erste Trennschicht aufgetragene zweite Trennschicht, wobei die zweite Trennschicht beziehungsweise die gegebenenfalls weiteren Trennschichten besser auf der vorhergehenden Trennschicht verankert sind als die erste Trennschicht auf der Thermoplastfolie,
d) eine vollflächig auf die zweite beziehungsweise gegebenenfalls letzte Trennschicht aufgetragene Haftklebemasse, die auf der zweiten beziehungsweise gegebenenfalls letzten Trennschicht besser verankert ist als die erste Trennschicht auf der Thermoplastfolie und wobei die Klebemasse besser auf dem Haftgrund haftet als die erste Trennschicht auf der Thermoplastfolie.

2. Klebeband nach Anspruch 1, **dadurch gekennzeichnet, daß** die Thermoplastfolie aus gerecktem Polyolefinen oder aus Polyester besteht und insbesondere transparent ist.

3. Klebeband nach Anspruch 1, **dadurch gekennzeichnet, daß** die Thermoplastfolie aus gerecktem HDPE, aus PVC, aus PET, aus monoaxial gerecktem Polypropylen oder aus biaxial gerecktem Polypropylen besteht.

4. Klebeband nach zumindest einem der vorhergehenden Ansprüche, **dadurch gekennzeichnet, daß** die Haftung der Primerschicht auf der Thermoplastfolie und weiterer Schichten untereinander durch Coronabehandlung oder Flammenbehandlung verbessert wird.

5. Klebeband nach zumindest einem der vorhergehenden Ansprüche, **dadurch gekennzeichnet, daß** die aufgetragene Primerschicht auf der Folienoberfläche charakteristische Zeichen beziehungsweise Symbole darstellt.

6. Klebeband nach zumindest einem der vorhergehenden Ansprüche, **dadurch gekennzeichnet, daß** die erste Trennschicht Harzdispersionen, Acrylatdispersionen, Polymerdispersionen oder insbesondere wasserbasierende, lösemittelbasierende oder UV-härtende Flexodruckfarben umfasst.

7. Klebeband nach zumindest einem der vorhergehenden Ansprüche, **dadurch gekennzeichnet, dass** die zweite Trennschicht beziehungsweise gegebenenfalls vorhandene weitere Trennschichten Harzdispersionen, Acrylatdispersionen, Polymerdispersionen oder insbesondere wasserbasierende, lösemittelbasierende oder UV-härtende Flexodruckfarben umfaßt.

8. Klebeband nach zumindest einem der vorhergehenden Ansprüche, **dadurch gekennzeichnet, daß** die Klebemasse eine solche auf Basis einer wäßrigen Acrylatdispersion ist.

9. Klebeband nach zumindest einem der vorhergehenden Ansprüche, **dadurch gekennzeichnet, daß** das Klebeband beliebig, durch Bedruckung mit Standardfarben in einer bevorzugten Version auf der Klebmassenseite individualisiert wird.

10. Klebeband nach zumindest einem der vorhergehenden Ansprüche, **dadurch gekennzeichnet, daß** die Auftragsmenge der Primerschicht auf dem Trägermaterial 0,5 bis 12 g/qm, besonders bevorzugt 1,5 bis 6 g/qm beträgt,
die Auftragsmenge der ersten Trennschicht auf der Primerschicht 2 bis 18 g/qm, besonders bevorzugt 5 bis 11 g/qm, beträgt,
die Auftragsmenge der zweiten Trennschicht beziehungsweise gegebenenfalls weiterer Trennschichten auf die vorhergehende Trennschicht 2 bis 18 g/qm, besonders bevorzugt 5 bis 11 g/qm, beträgt.

11. Verwendung des Klebebandes nach zumindest einem der vorhergehenden Ansprüche als Verpackungsklebeband mit gutem Kartonverschluß und mit gutem Anfaßvermögen zu Papier, insbesondere recyceltem Papier, mit ausreichender Kohäsion, mit guter Verpackungssicherheit und mit leichtem Abrollen.

## Claims

1. A multilayer adhesive tape having a backing based on an oriented thermoplastic film, whose upper face is coated, if desired, with a release coating and to whose lower face the following layers have been applied:
a) a primer layer which is not applied over the full area and which anchors very well to the thermoplastic film,
b) a first release layer which is applied over the full area of the applied primer layer, and the free thermoplastic film surface, the release layer anchoring better to the primer layer than to the thermoplastic film,
c) at least one second release layer which is applied over the full area of the first release layer, the second release layer or the optionally further release layers being anchored better on the previous release layer than the first release layer on the thermoplastic film,
d) a pressure-sensitive adhesive composition which is applied over the full area of the second or optionally last release layer and which is anchored better on the second or optionally last release layer than the first release layer on the thermoplastic film and the adhesive composition adhering better to the pressure-sensitive base than the first release layer to the thermoplastic film.

2. The adhesive tape as claimed in claim 1, **characterized in that** the thermoplastic film comprises oriented polyolefins or polyester and in particular is transparent.

3. The adhesive tape as claimed in claim 1, **characterized in that** the thermoplastic film comprises oriented HDPE, or PVC, or PET, or monoaxially oriented polypropylene or biaxially oriented polypropylene.

4. The adhesive tape as claimed in at least one of the preceding claims, **characterized in that** the adhesion of the primer layer to the thermoplastic film and of further layers to one another is improved by means of corona treatment or flame treatment.

5. The adhesive tape as claimed in at least one of the preceding claims, **characterized in that** the primer layer applied on the film surface constitutes characteristic signs or symbols.

6. The adhesive tape as claimed in at least one of the preceding claims, **characterized in that** the first release layer comprises resin dispersions, acrylate dispersions, polymer dispersions or, in particular, water-based, solvent-based or UV-curing flexographic printing inks.

7. The adhesive tape as claimed in at least one of the preceding claims, **characterized in that** the second release layer or any further release layers comprises/comprise resin dispersions, acrylate dispersions, polymer dispersions or, in particular, water-based, solvent-based or UV-curing flexographic printing inks.

8. The adhesive tape as claimed in at least one of the preceding claims, **characterized in that** the adhesive composition is based on an aqueous acrylate dispersion.

9. The adhesive tape as claimed in at least one of the preceding claims, **characterized in that** the adhesive tape individualized as desired by printing with standard inks in a preferred version on the adhesive composition side.

10. The adhesive tape as claimed in at least one of the preceding claims, **characterized in that** the application rate of the primer layer to the backing material is from 0.5 to 12 g/m², with particular preference from 1.5 to 6 g/m²,
the application rate of the first release layer to the primer layer is from 2 to 18 g/m², with particular preference from 5 to 11 g/m²,
the application rate of the second release layer or optionally further release layers to the previous release layer is from 2 to 18 g/m², with particular preference from 5 to 11 g/m².

11. The use of the adhesive tape as claimed in at least one of the preceding claims as an adhesive packaging tape providing effective carton sealing and with good adhesion to paper, especially recycled paper, with sufficient cohesion, with good packaging security, and with easy unwind.

## Revendications

1. Ruban adhésif en plusieurs couches, avec un support à base d'une feuille thermoplastique étirée dont le côté supérieur est éventuellement revêtu d'un vernis de séparation, les couches ci-dessous étant appliquées sur sa surface inférieure:
a) une couche de fond qui n'est pas appliquée sur toute sa surface, la.couche de fond étant très bien ancrée sur la feuille thermoplastique,
b) une première couche de séparation appliquée sur toute la surface de la couche de fond appliquée et la surface libre de la feuille thermoplastique, la couche de séparation étant mieux ancrée sur la couche de fond que sur la feuille thermoplastique,
c) au moins une deuxième couche de séparation appliquée sur toute la surface de la première couche de séparation, la deuxième couche de séparation ou, le cas échéant, les autres couches de séparation, étant mieux ancrées sur la couche de séparation précédente que la première couche de séparation sur la feuille thermoplastique,
d) une pâte adhésive appliquée sur toute la surface de la deuxième couche de séparation ou, le cas échéant, de la dernière couche de séparation, et qui est mieux ancrée sur la deuxième couche de séparation
ou, le cas échéant, sur la dernière couche de séparation que la première couche de séparation sur la feuille thermoplastique, la pâte adhésive adhérant mieux sur la base d'adhérence que la première couche de séparation sur la feuille thermoplastique.

2. Bande adhésive selon la revendication 1, **caractérisée en ce que** la feuille thermoplastique est constituée de polyoléfines étirées ou de polyester et est en particulier transparente.

3. Bande adhésive selon la revendication 1, **caractérisée en ce que** la feuille thermoplastique est constituée de HDPE étiré, de PVC, de PET, de polypropylène étiré monoaxialement ou de polypropylène étiré biaxialement.

4. Bande adhésive selon au moins l'une quelconque des revendications précédentes, **caractérisée en ce que** l'adhérence de la couche de fond sur la feuille thermoplastique et des autres couches entre elles est améliorée par un traitement Corona ou un traitement à la flamme.

5. Bande adhésive selon au moins l'une quelconque des revendications précédentes, **caractérisée en ce que** la couche de fond appliquée à la surface de la feuille forme des signes ou des symboles caractéristiques.

6. Bande adhésive selon au moins l'une quelconque des revendications précédentes, **caractérisée en ce que** la première couche de séparation contient des dispersions de résine, des dispersions d'acrylate, des dispersions de polymère ou en particulier des encres de flexographie à base d'eau, à base de solvant ou qui durcissent sous UV.

7. Bande adhésive selon au moins l'une quelconque des revendications précédentes, **caractérisée en ce que** la deuxième couche de séparation ou, le cas échéant, les autres couches de séparation présentes, contiennent des dispersions de résine, des dispersions d'acrylate, des dispersions de polymère ou en particulier des encres de flexographie à base d'eau, à base de solvant ou qui durcissent sous UV.

8. Bande adhésive selon au moins l'une quelconque des revendications précédentes, **caractérisée en ce que** la pâte adhésive est une pâte adhésive à base d'une dispersion aqueuse d'acrylate.

9. Bande adhésive selon au moins l'une quelconque des revendications précédentes, **caractérisée en ce que** la bande adhésive est individualisée de façon quelconque, par impression à l'aide d'encres standard dans une version préférée, sur le côté de la pâte adhésive.

10. Bande adhésive selon au moins l'une quelconque des revendications précédentes, **caractérisée en ce que** la quantité de couche de fond appliquée sur le matériau de support est de 0,5 à 12 g/mètre carré, et de façon particulièrement préférée de 1,5 à 6 g/mètre carré,
la quantité appliquée de la première couche de séparation sur la couche de fond étant de 2 à 18 g/mètre carré et de façon particulièrement préférée de 6 à 11 g/mètre carré,
la quantité appliquée de la deuxième couche de séparation ou, le cas échéant, des autres couches de séparation sur la couche de séparation précédente étant de 2 à 18 g/mètre carré et de façon particulièrement préférée de 5 à 11 g/mètre carré.

11. Utilisation du ruban adhésif selon au moins l'une quelconque des revendications précédentes comme bande adhésive d'emballage fermant bien. des cartons et avec un bon pouvoir d'accrochage sur le papier, en particulier du papier recyclé, avec une cohésion suffisante, une bonne protection de l'emballage et un déroulement aisé.
